(19)

Europäisches Patentamt

European Patent Office

Office européen des brevets

(11) **EP 4 510 440 A1**

(12) **EUROPEAN PATENT APPLICATION**
published in accordance with Art. 153(4) EPC

(43) Date of publication:
**19.02.2025 Bulletin 2025/08**

(21) Application number: **23851601.7**

(22) Date of filing: **27.07.2023**

(51) International Patent Classification (IPC):
$H02P\ 6/16^{(2016.01)}$    $H02P\ 23/14^{(2006.01)}$

(86) International application number:
**PCT/CN2023/109654**

(87) International publication number:
**WO 2024/032380 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210966685**

(71) Applicants:
• **Zhejiang Geely Holding Group Co., Ltd.**
  **Hangzhou, Zhejiang 310051 (CN)**
• **Ningbo Geely Royal Engine Components Co.,
  Ltd.**
  **Ningbo City, Zhejiang 315336 (CN)**
• **Aurobay Technology Co., Ltd.**
  **Ningbo, Zhejiang 315899 (CN)**

(72) Inventors:
• **ZHANG, Ming**
  **Hangzhou, Zhejiang 310051 (CN)**
• **ZHONG, Jun**
  **Hangzhou, Zhejiang 310051 (CN)**
• **LIU, Yiqiang**
  **Hangzhou, Zhejiang 310051 (CN)**
• **GAO, Dehai**
  **Hangzhou, Zhejiang 310051 (CN)**
• **LU, Chengwei**
  **Hangzhou, Zhejiang 310051 (CN)**
• **ZHAO, Fucheng**
  **Hangzhou, Zhejiang 310051 (CN)**
• **WANG, Ruiping**
  **Hangzhou, Zhejiang 310051 (CN)**

(74) Representative: **Range, Christopher William**
  **Withers & Rogers LLP**
  **2 London Bridge**
  **London SE1 9RA (GB)**

(54) **MOTOR POSITION SIGNAL FAULT DETERMINATION METHOD, DEVICE, SYSTEM, AND VEHICLE**

(57)    Provided are a method for determining a fault in a position signal of a motor, a device, a system, and a vehicle. According to embodiments of the present disclosure, the method for determining the fault in the position signal of the motor includes: acquiring an electrical signal outputted by a position sensor, the position sensor being configured to acquire an angle of the motor; calculating a first angle of the motor based on the electrical signal by using a first algorithm; calculating a second angle of the motor based on the electrical signal by using a second algorithm, and in response to a difference between the first angle and the second angle being smaller than or equal to a predetermined value, determining that there is a fault in the position signal of the motor.

```
┌─────────────────────────────────────────┐
│ Acquiring an electrical signal outputted by │ S10
│ a position sensor, the position sensor being │
│ configured to acquire an angle of the       │
│ motor                                       │
└─────────────────────────────────────────┘
                    │
┌─────────────────────────────────────────┐
│ Calculating a first angle of the motor      │ S20
│ based on the electrical signal by using a   │
│ first algorithm                             │
└─────────────────────────────────────────┘
                    │
┌─────────────────────────────────────────┐
│ Calculating a second angle of the motor     │ S30
│ based on the electrical signal by using a   │
│ second algorithm                            │
└─────────────────────────────────────────┘
                    │
┌─────────────────────────────────────────┐
│ In response to a difference between the     │ S40
│ first angle and the second angle being      │
│ smaller than or equal to a predetermined    │
│ value, determining that there is no fault in │
│ the position signal of the motor            │
└─────────────────────────────────────────┘
```

FIG. 1

EP 4 510 440 A1

## Description

## CROSS-REFERENCE TO RELATED APPLICATION

This application claims priority to Chinese patent application No. 202210966685. X, titled "METHOR FOR DETERMING FAULT IN POSITION SIGNAL OF MOTOR, DEVICE, SYSTEM, AND VEHICLE" and filed on August 12, 2022, the entire contents of which are incorporated herein by reference.

## FIELD

The present disclosure relates to the field of electric motors, and more particularly, to a method for determining a fault in a position signal of a motor, a device, a system, and a vehicle.

## BACKGROUND

For hybrid and pure electric vehicles, an error in a position signal of a motor can lead to inaccuracies in motor torque estimation, resulting in unexpected torque and even traffic safety accidents. Therefore, it is necessary to design a dedicated monitoring scheme to detect validity of the position signal of the motor. In the related art, a plurality of rotational speed sensor signals are usually used for mutual verification. However, these solutions consume significant hardware resources, involve complex control, and are costly.

## SUMMARY

According to embodiments of the present disclosure, a method for determining a fault in a position signal of a motor, a device, a system, and a vehicle are provided.

The method for determining the fault in the position signal of the motor according to the embodiments of the present disclosure includes: acquiring an electrical signal outputted by a position sensor, the position sensor being configured to acquire an angle of a motor; calculating a first angle of the motor based on the electrical signal by using a first algorithm; calculating a second angle of the motor based on the electrical signal by using a second algorithm; and in response to a difference between the first angle and the second angle being smaller than or equal to a predetermined value, determining that there is no fault in the position signal of the motor.

In this way, diagnosis of a position sensor signal is performed based on inherent mathematical characteristics of the electrical signal outputted by the position sensor. Safety verification of the position sensor is realized at a lower cost, so as to avoid generation of an unexpected torque of the vehicle during outputting power, ensuring normal driving of the vehicle. Without hardware redundancy, self-diagnosis can be performed based on the inherent mathematical characteristics of the position sensor signal, realizing self-verification of whether the electrical signal is valid, reducing a development cost of functional safety monitoring of the position sensor, and thus improving robustness of the control system.

In some embodiments, the calculating the first angle of the motor based on the electrical signal by using the first algorithm includes: calculating a tangent value of the first angle of the motor based on the electrical signal by using the first algorithm; and obtaining the first angle of the motor based on the tangent value of the first angle of the motor.

In some embodiments, the first algorithm is:

$$Tan\theta_{n-1} = \frac{\sin\theta_{n-1}}{\cos\theta_{n-1}},$$

where $\theta_{n-1}$ represents an angle of the motor at a moment $n$-1.

In some embodiments, the calculating the second angle of the motor based on the electrical signal by using the second algorithm includes: calculating a tangent value of the second angle of the motor based on the electrical signal by using the second algorithm; and obtaining the second angle of the motor based on the tangent value of the second angle of the motor.

In some embodiments, the second algorithm is:

$$Tan\theta_{n-1} = \frac{-\Delta\cos\theta_{n-1}}{\Delta\sin\theta_{n-1}} = \frac{-(\cos\theta_n - \cos\theta_{n-2})}{\sin\theta_n - \sin\theta_{n-2}},$$

where $\theta_n$ represents an angle of the motor at a moment $n$, $\theta_{n-1}$ is an angle of the motor at a moment $n$-1, and $\theta_{n-2}$ is an angle of the motor at a moment $n$-2.

In some embodiments, the method for determining the fault in the position signal of the motor includes: in response to the difference between the first angle and the second angle being greater than the predetermined value period, determining that there is a fault in the position signal.

In some embodiments, the method for determining the fault in the position signal of the motor further includes, prior to the calculating the first angle of the motor based on the electrical signal by using the first algorithm: correcting the electrical signal.

A control device according to the embodiments of the present disclosure includes: an acquiring module configured to acquire an electrical signal outputted by a position sensor, the position sensor being configured to obtain an angle of a motor; a first calculation module configured to calculate a first angle of the motor based on the electrical signal by using a first algorithm; a second calculation module configured to calculate a second angle of the motor based on the electrical signal by using a second algorithm; and a determination module configured to in response to a difference between the first angle and the second angle being smaller than or equal to a predetermined value, determine that there is no fault in the position signal.

A control system according to the embodiments of the present disclosure includes a motor, a position sensor, an inverter, and a controller. The position sensor is connected to the motor. The inverter is connected to the motor. The controller is connected to the position sensor and the inverter. The controller is configured to implement the method for determining the fault in the position signal of the motor according to any one of the above embodiments.

The vehicle according to the embodiments of the present disclosure includes the above control system.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings.

FIG. 1 is a schematic flowchart illustrating a method for determining a fault in a position signal of a motor according to an embodiment of the present disclosure.
FIG. 2 is a schematic structural diagram of a control system according to an embodiment of the present disclosure.
FIG. 3 is a schematic diagram of a module of a control device according to an embodiment of the present disclosure.
FIG. 4 is another schematic flowchart illustrating a method for determining a fault in a position signal of a motor according to an embodiment of the present disclosure.
FIG. 5 is yet another schematic flowchart illustrating a method for determining a fault in a position signal of a motor according to an embodiment of the present disclosure.
FIG. 6 is still yet another schematic flowchart illustrating a method for determining a fault in a position signal of a motor according to an embodiment of the present disclosure.
FIG. 7 is still yet another schematic flowchart illustrating a method for determining a fault in a position signal of a motor according to an embodiment of the present disclosure.
FIG. 8 is still yet another schematic flowchart illustrating a method for determining a fault in a position signal of a motor according to an embodiment of the present disclosure.
FIG. 9 is a schematic diagram of a correction process of a position signal of a motor according to an embodiment of the present disclosure.
FIG. 10 is still yet another schematic flowchart illustrating a method for determining a fault in a position signal of a motor according to an embodiment of the present disclosure.

Description of main component symbols: control system 10; motor 11; position sensor 12; inverter 13; controller 14; control device 20; acquiring module 21; correction module 22; first calculation module 23; second calculation module 24; and determination module 25.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the embodiments of the present disclosure.

In the description of the present disclosure, it should be noted that, unless otherwise clearly stipulated and limited, terms such as "mount," "connect," and "connect to" should be understood in a broad sense. For example, it may be a fixed connection or a detachable connection or connection as one piece; mechanical connection or electrical connection or connection that allows mutual communication; direct connection or indirect connection through an intermediate; or internal communication of two components or interaction relationship between two components. For those skilled in the art, specific meanings of the above-mentioned terms in the present disclosure can be understood according to specific circumstances.

In the present disclosure, unless expressly stipulated and defined otherwise, the first feature disposing "on" or "under" the second feature may mean that the first feature is in direct contact with the second feature, or the first and second features are in indirect contact through another feature between the first and second features. In addition, the first feature disposing "above" the second feature means that the first feature is directly above or obliquely above the second feature, or simply means that the level of the first feature is higher than that of the second feature. The first feature disposing "below" the second feature may mean that the first feature is directly below or obliquely below the second feature, or simply mean that the level of the first feature is lower than that of the second feature.

Various embodiments or examples for implementing different structures of the present disclosure are provided below. In order to simplify the description of the present disclosure, components and arrangements of specific examples are described herein. Of course, these specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

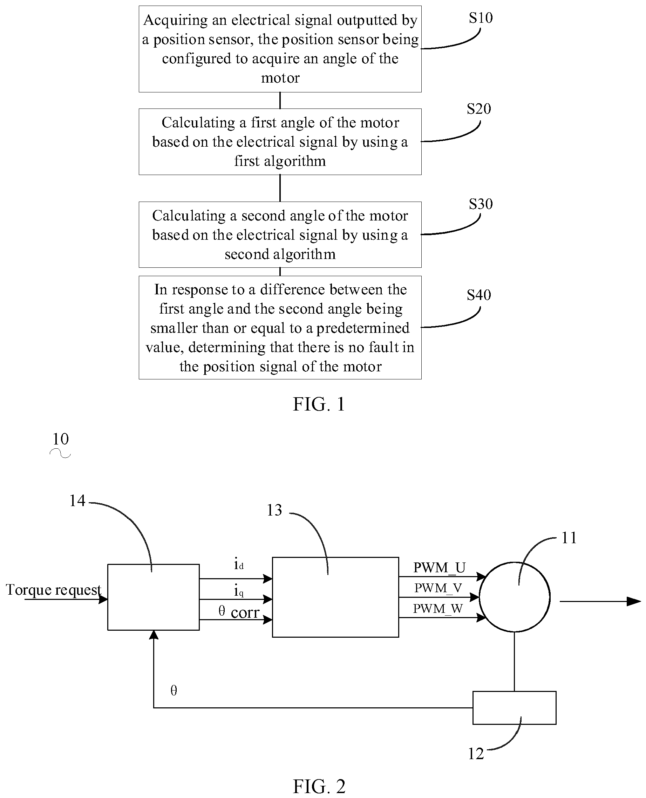

As illustrated in FIG. 1, a method for determining a fault in a position signal of a motor 11 according to an embodiment of the present disclosure includes operations at blocks.

At block S10, an electrical signal outputted by a position sensor 12 is acquired. The position sensor 12 is configured to acquire an angle of the motor 11.

At block S20, a first angle $\theta1$ of the motor 11 is calculated based on the electrical signal by using a first algorithm.

At block S30, a second angle $\theta2$ of the motor 11 is calculated based on the electrical signal by using a second algorithm.

At block S40, in response to a difference between the first angle $\theta1$ and the second angle $\theta2$ being smaller than or equal to a predetermined value, that there is no fault in the position signal of the motor 11 is determined.

As illustrated in FIG. 2, a control system 10 according to an embodiment of the present disclosure includes a motor 11, a position sensor 12, an inverter 13, and a controller 14. The position sensor 12 is connected to the motor 11. The inverter 13 is connected to the motor 11. The controller 14 is connected to the position sensor 12 and the inverter 13. The controller 14 is configured to implement the above method for determining the fault in the position signal of the motor 11.

In other words, the controller 14 is configured to acquire the electrical signal outputted by the position sensor 12. The position sensor 12 is configured to acquire the angle of the motor 11. Also, the controller 14 is configured to calculate the first angle $\theta1$ of the motor 11 based on the electrical signal by using the first algorithm. The controller 14 is further configured to calculate the second angle $\theta2$ of the motor 11 based on the electrical signal by using the second algorithm. In addition, the controller 14 is further configured to, in response to the difference between the first angle $\theta1$ and the second angle $\theta2$ being smaller than or equal to the predetermined value, determine that there is no fault in the position signal of the motor 11.

A vehicle according to an embodiment of the present disclosure includes the above control system 10.

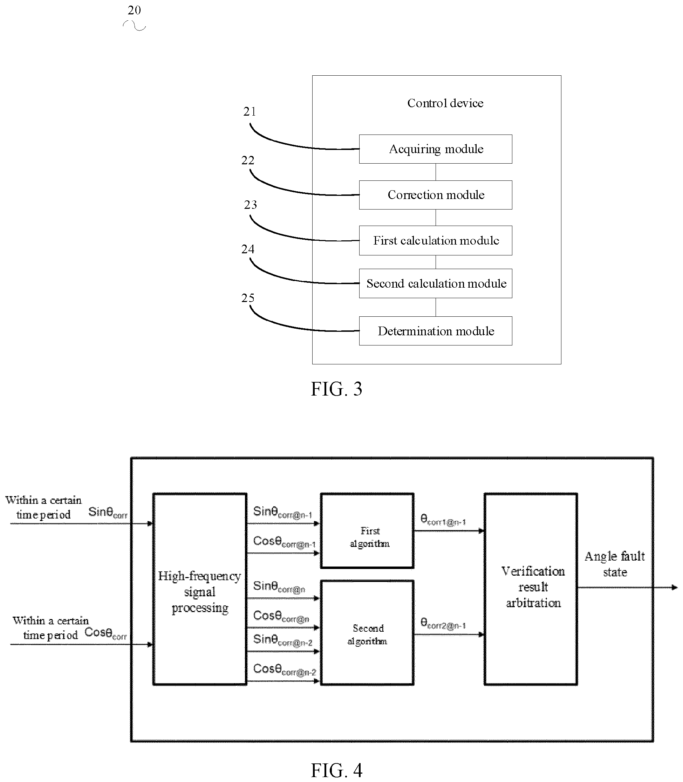

As illustrated in FIG. 3, a control device 20 according to an embodiment of the present disclosure includes an acquiring module 21, a first calculation module 23, a second calculation module 24, and a determination module 25. The acquiring module 21 is configured to acquire an electrical signal outputted by a position sensor 12. The position sensor 12 is configured to acquire an angle of a motor 11. The first calculation module 23 is configured to calculate a first angle $\theta1$ of the motor 11 based on the electrical signal by using a first algorithm. The second calculation module 24 is configured to calculate a second angle $\theta2$ of the motor 11 based on the electrical signal by using a second algorithm. The determination module 25 is configured to in response to a difference between the first angle $\theta1$ and the second angle $\theta2$ being smaller than or equal to a predetermined value, determine that there is no fault in the position signal of the motor 11.

In this way, signal diagnosis of the position sensor 12 is performed based on inherent mathematical characteristics of the electrical signal outputted by the position sensor 12. Safety verification of the position sensor 12 is realized at a lower cost, so as to avoid generation of an unexpected torque of the vehicle due to the fault in the position signal of the motor 11, ensuring normal driving of the vehicle. Without hardware redundancy, self-diagnosis can be performed by the inherent mathematical characteristics of the signal of the position sensor 12, realizing self-verification of whether the electrical signal is valid. Verification of whether there is the fault in the position signal of the motor 11 reduces a development cost of functional safety monitoring of the position sensor 12, and improves robustness of the control system 10.

In an exemplary embodiment of the present disclosure, most of the vehicles are driven by a permanent magnet synchronous motor 11. During driving, it is necessary to detect an angular position of a rotor of the motor 11, to adjust a straight-axis current and a cross-axis current of the motor 11 based on the angular position, and in turn to change an output torque of the motor 11. Accuracy of the angular position of the motor 11 can affect the straight-axis current and the cross-axis current of the motor 11, which in turn can affect the output torque of the motor 11. To effectively control the output torque of the motor 11, it is necessary to verify angle information of the motor 11 in real time to determine that there is the fault in the position signal of the motor 11. Therefore, the motor 11 can be prevented from outputting the unexpected torque in the case of the fault in position signal to cause traffic safety accidents.

In the operation at block S10, the angle information of the motor 11 is usually detected by the position sensor 12. The position sensor 12 may be an eddy current sensor or a resolver sensor. The present disclosure is not limited in this regard.

In one embodiment, the position sensor 12 is the eddy current sensor. The eddy current sensor is mounted at a rotation shaft of the motor 11 to rotate synchronously with the motor 11 to induce the angle information of the motor 11. The eddy current sensor may include a transmitting coil and two receiving coils. The two receiving coils have one configured to output a sine signal, and another configured to output a cosine signal. An oscillation circuit inside the eddy current sensor enables a sine internal magnetic field to be formed by the transmitting coil. The two receiving coils are located in an oscillation magnetic field to generate an induced electromotive force proportional to a magnetic field area. Due to an eddy current effect of a conductor in the magnetic field, an eddy current magnetic field cancels out a source excitation magnetic field. That a position of a target gear plate changes with a rotor angle of the motor is detected. An induced voltage of the receiving coil is processed by detection and amplification and an electric signal is outputted finally. The electrical signal may include the sine signal and the cosine signal. A tangent value is calculated based on the sine signal and the cosine signal outputted by the eddy current sensor 12. Then, a corresponding arc tangent function value is obtained, by looking up the table based on the tangent value, so as to obtain the real-time angle information of the motor 11.

In the operation at block S20 and the operation at block S30, based on the electrical signal outputted by the position sensor 12, an angle of the position sensor 12 at a same moment is obtained by using different algorithms. A difference between angles of the motor 11 at the same moment under two algorithms is compared. In response to the difference being greater than the predetermined value, it can be determined that there is the fault in the position signal of the motor 11. Without hardware redundancy, self-diagnosis can be performed by using two different algorithms and based on the inherent mathematical characteristics of the signal of position sensor 12, realizing verification of whether there is the fault in the position signal of the motor 11. In this way, the development cost of functional safety monitoring is reduced.

In the operation at block S40, in response to the difference between the first angle $\theta1$ and the second angle $\theta2$ being smaller than or equal to the predetermined value, that there is no fault in the position signal of the motor 11 is determined, and thus that the angular position of the motor 11 is accurate can be determined. In one embodiment, the predetermined value is set to 10 degrees. A first angle $\theta1$ of the motor 11 at a moment 15ms is calculated to be 35.4 degrees by using the first algorithm. A second angle $\theta2$ of the motor 11 at the moment 15ms is calculated to be 36 degrees by using the second algorithm. Since a difference between the second angle $\theta2$ and the first angle $\theta1$ is 0.6 degrees, that there is no fault in the position signal of the motor 11 can be determined, and thus that the angular position of the motor 11 is accurate can be determined.

It should be noted that after determining that there is no fault in the position signal of the motor 11, a torque request may be acquired, and then the torque request may be converted into a control instruction based on the first angle $\theta1$ and/or the second angle $\theta2$ of the motor 11. As described above, when it is determined that there is no fault in the position signal of the motor 11, the torque request is converted into the control instruction for controlling operation of the motor 11 based on current position information of the motor 11, allowing the vehicle to generate an expected torque to ensure normal driving.

A first angle $\theta1$ of the motor 11 at some moment is obtained by using the first algorithm. A second angle $\theta2$ of the motor 11 at the same moment is obtained by using the second algorithm. When the first angle $\theta1$ is equal to the second angle $\theta2$, position information of the motor 11 at the moment may be the first angle $\theta1$ or the second angle $\theta2$. The torque request is converted into the control instruction for controlling the operation of the motor 11 based on the position information of the motor 11 at this moment.

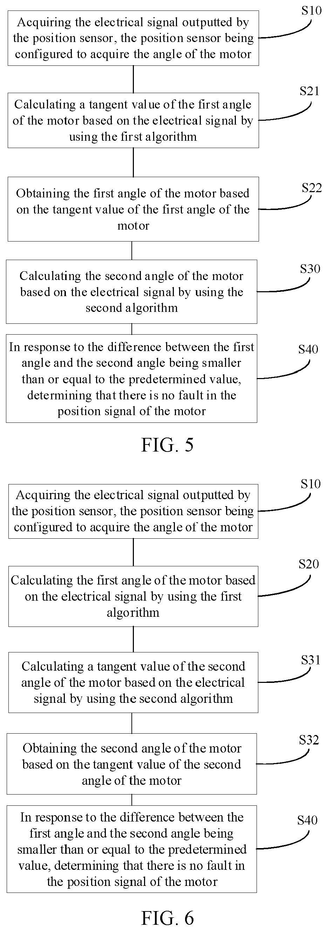

When the first angle $\theta1$ and the second angle $\theta2$ are different from each other, and the difference between the first angle $\theta1$ and the second angle $\theta2$ is smaller than the predetermined value, the position information of the motor 11 at this moment may be the first angle $\theta1$ or the second angle $\theta2$, or an average value between the first angle $\theta1$ and the second angle $\theta2$. The torque request is converted into the control instruction for controlling the operation of the motor 11 based on the position information of the motor 11 at this moment. As illustrated in FIG. 4 and FIG. 5, in some embodiments, the calculating the first angle $\theta1$ of the motor 11 based on the electrical signal by using the first algorithm (the operation at block S20) includes operations at blocks.

At block S21, a tangent value of the first angle $\theta1$ of the motor 11 is calculated based on the electrical signal by using the first algorithm.

At block S22, the first angle $\theta1$ of the motor 11 is obtained based on the tangent value of the first angle $\theta1$ of the motor 11.

In some embodiments, the first calculation module 23 is configured to calculate the tangent value of the first angle $\theta1$ of the motor 11 based on the electrical signal by using the first algorithm, and is further configured to obtain the first angle $\theta1$ of the motor 11 based on the tangent value of the first angle $\theta1$ of the motor 11.

In some embodiments, the controller 14 is configured to calculate the tangent value of the first angle $\theta1$ of the motor 11 based on the electrical signal by using the first algorithm, and is further configured to obtain the first angle $\theta1$ of the motor 11 based on the tangent value of the first angle $\theta1$ of the motor 11.

In this way, the tangent value of the first angle $\theta1$ of the motor 11 at some moment is calculated by using the first algorithm. An angle corresponding to the tangent value is obtained based on the tangent value, obtaining the angle of the motor 11 at some moment.

However, when the angle of the first angle $\theta1$ of the motor 11 is obtained based on the tangent value of the first angle θ1 of the motor 11, the angle may be obtained by looking up a lookup table between the tangent value and the angle value, or may be calculated by an arctangent trigonometric function. The present disclosure is not limited in this regard.

In some embodiments, the first algorithm is:

$$Tan\theta_{n-1} = \frac{\sin\theta_{n-1}}{\cos\theta_{n-1}},$$

where $\theta_{n-1}$ represents an angle of the motor at a moment $n$-1.

In this way, a ratio of a value of the sine signal obtained by the position sensor 12 at some moment to a value of the cosine signal obtained by the position sensor 12 at same moment is calculated to obtain a corresponding tangent value. Then the first angle of the motor 11 corresponding to the tangent value can be obtained through looking up the table or calculating.

In one embodiment, at a moment 12ms, a value of the sine signal outputted by the position sensor 12 is obtained as 0.5, and a value of the cosine signal outputted by the position sensor 12 is obtained as $\sqrt{3}/2$. Based on the first algorithm, the tangent value of the first angle θ1 of the motor 11 is calculated as $\sqrt{3}/3$. Subsequently, the table can be looked up based on the tangent value. The first angle θ1 of the motor 11 at the moment 12ms is obtained as 30 degrees.

As illustrated in FIG. 4 and FIG. 6, in some embodiments, the calculating the second angle θ2 of the motor 11 based on the electrical signal by using the second algorithm (the operation at block S30), includes operations at blocks.

At block S31, a tangent value of the second angle θ2 of the motor 11 is calculated based on the electrical signal by using the second algorithm.

At block S32, the second angle θ2 of the motor 11 is obtained based on the tangent value of the second angle θ2 of the motor 11.

In some embodiments, the second calculation module 24 is configured to calculate the tangent value of the second angle θ2 of the motor 11 based on the electrical signal by using the second algorithm. Also, the second calculation module 24 is configured to obtain the second angle θ2 of the motor 11 based on the tangent value of the second angle θ2 of the motor 11.

In some embodiments, the controller 14 is configured to calculate the tangent value of the second angle θ2 of the motor 11 based on the electrical signal by using the second algorithm. Also, the controller 14 is configured to obtain the second angle θ2 of the motor 11 based on the tangent value of the second angle θ2 of the motor 11.

In this way, the electrical signal of the position sensor 12 is obtained. A tangent value corresponding to the angle of the motor 11 at some moment is calculated. An angle corresponding to the tangent value is obtained based on the tangent value to obtain the angle of the motor 11 at some moment.

However, when the second angle θ2 of the motor 11 is obtained based on the tangent value of the second angle θ2 of the motor 11, the second angle θ2 of the motor 11 may be obtained specifically by looking up the mapping relationship table between the tangent value and the angle value, or may be calculated by the arctangent trigonometric function. The present disclosure is not limited to this regard.

In some embodiments, the second algorithm is:

$$Tan\theta_{n-1} = \frac{-\Delta\cos\theta_{n-1}}{\Delta\sin\theta_{n-1}} = \frac{-\left(\cos\theta_n - \cos\theta_{n-2}\right)}{\sin\theta_n - \sin\theta_{n-2}},$$

where $\theta_n$ represents an angle of the motor at a moment $n$, $\theta_{n-1}$ is an angle of the motor at a moment $n$-1, and $\theta_{n-2}$ is an angle of the motor at a moment $n$-2.

In this way, values of sine signals and cosine signals of the position sensor 12 at a moment $n$ and at a moment $n$-2 are obtained. A tangent value corresponding to an angle of the motor 11 at a moment $n$-1 is calculated. Further, the second angle θ2 of the motor 11 corresponding to the tangent value may be obtained through looking up the table or calculating.

In an exemplary embodiment of the present disclosure, a different between the two sine signals of the motor at the moment $n$ and the moment $n$-2, and a difference between the two cosine signals of the motor 11 at the moment $n$ and the moment $n$-2 are calculated, respectively. Since the two moments have a short interval, a sine difference and a cosine difference can be approximately regarded as sine and cosine differential values at the moment $n$-1. Therefore, the second algorithm can be used to obtain the tangent value of the angle of the motor 11 at the moment $n$-1. Then, the angle of the motor 11 at the moment $n$-1 can be obtained through looking up the table.

In one embodiment, at a moment 12ms, a value of the sine signal outputted by the position sensor 12 is obtained as 0.5, and a value of the cosine signal outputted by the position sensor 12 is obtained as 0.866. At a moment 14ms, a value of the sine signal outputted by the position sensor 12 is obtained as 0.642, and a value of the cosine signal outputted by the position sensor 12 is obtained as 0.766. Based on the second calculation algorithm, the tangent value corresponding to the second angle θ2 can be calculated to be 0.704. Subsequently, based on the tangent value, the second angle θ2 of the motor 11 at the moment 12ms is obtained as 35.15 degrees through looking up the table.

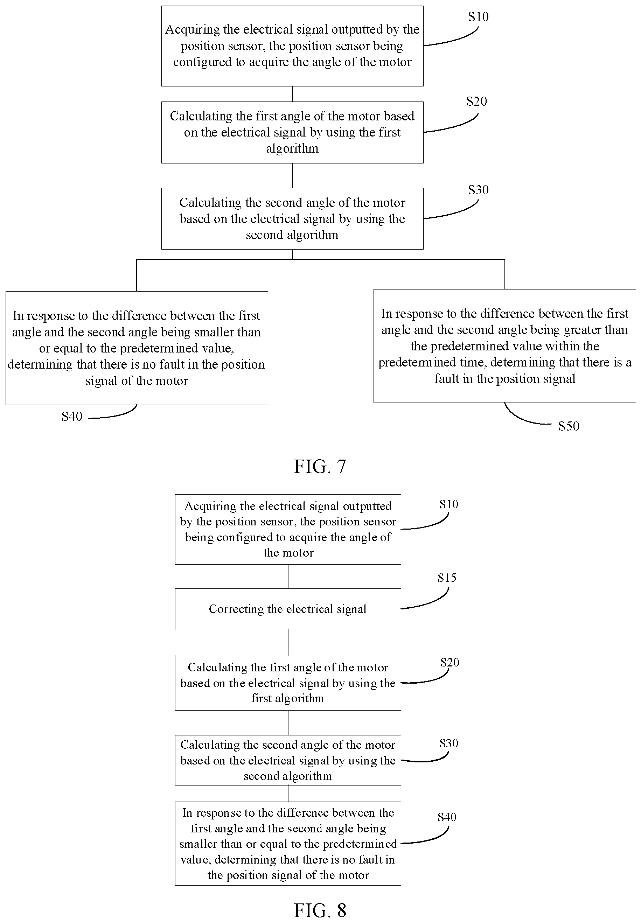

As illustrated in FIG. 4 and FIG. 7, in some embodiments, the method for determining the fault in the position signal of the motor 11 includes operations at blocks.

At block S50, in response to the difference between the first angle θ1 and the second angle θ2 being greater than the predetermined value within a predetermined time period, that there is a fault in the position signal of the motor 11 is determined.

In some embodiments, the determination module 25 is configured to, in response to the difference between the first angle θ1 and the second angle θ2 being greater than the predetermined value within the predetermined time period, determine that there is a fault in the position signal of the motor 11.

In some embodiments, the controller 14 is configured to, in response to the difference between the first angle θ1 and the second angle θ2 being greater than the predetermined value within the predetermined time period, determine that there is a fault in the position signal of the motor 11.

In this way, in response to the difference between the first angle θ1 and the second angle θ2 being greater than the predetermined value within the predetermined time period, that there is a fault in the position signal of the motor 11 can be determined. The predetermined time period can be set by a user himself. It should be noted that when there is a fault in the position signal of the motor 11, the control system 10 may output a fault state of the position signal of the motor 11 to facilitate maintenance by the user.

In one embodiment, the predetermined time period is set to 200 ms and the predetermined value is set to 10 degrees. At a moment 15ms, the value of the sine signal outputted by the position sensor 12 is acquired as 1/2, the value of the cosine signal outputted by the position sensor 12 is acquired as 0.866. The tangent value of the first angle θ1 of the motor 11 is calculated as 0.577 based on the first algorithm. After looking up the table based on the tangent value, the first angle θ1 of the motor 11 at the moment 15ms is 29.99 degrees.

At the moment 14ms, a value of the sine signal outputted by the position sensor 12 is acquired as 0.656, and a value of the cosine signal outputted by the position sensor 12 is acquired as 0.755. At a moment 16ms, a value of the sine signal outputted by the position sensor 12 is acquired as 0.707, and a value of the cosine signal outputted by the position sensor 12 is acquired as 0.707. Based on the second calculation algorithm, a tangent value corresponding to the second angle θ2 at the moment 15ms is 0.941. After looking up the table based on the tangent value, a second angle θ2 of the motor 11 at the moment 15ms is 43.26 degrees. At the moment 15ms, a difference between the first angle θ1 and the second angle θ2 of the motor 11 is 13.27 degrees, and the difference between the first angle θ1 and the second angle θ2 of the motor 11 is always more than 10 degrees for 200 ms, in such a manner that that there is a fault in the position signal of the motor 11 can be determined.

As illustrated in FIG. 8, in some embodiments, the method for determining the fault in the position signal of the motor 11 further includes, prior to the calculating the first angle θ1 of the motor 11 based on the electrical signal by using the first algorithm (the operation at block S20), operations at blocks.

At block S15, the electrical signal is corrected.

In some embodiments, the control device 20 may further include a correction module 22 configured to correct the electrical signal.

In some embodiments, the controller 14 is configured to correct the electrical signal.

In this way, an error is eliminated by correcting the electrical signal outputted by the position sensor 12 to obtain a standardized sine and cosine curve signal, facilitating subsequent verification of the electrical signal to determine whether there is a fault in the position signal of the motor 11.

It should be understood that during the operation of the motor 11 and detection of the angle of the motor 11 by the position sensor 12, the electrical signal obtained by the position sensor 12 may be a non-standard sine and cosine curve since the position sensor 12 is electromagnetically disturbed or stability or accuracy of the position sensor 12 itself is affected. Function of correction is to transform the non-standard sine and cosine curve into the standard sine and cosine curve through correction.

In an exemplary embodiment of the present disclosure, a maximum value and a minimum value of both a sine voltage signal and a cosine voltage signal within one period can be obtained. Then, the sine voltage value and the cosine voltage signal can be normalized based on the maximum value and the minimum value, respectively, to obtain the normalized sine voltage signal and the normalized cosine voltage signal. Amplitude ranges of the sine voltage signal and the cosine voltage signal can be controlled between [-1, 1]. After correcting the electrical signal, the corrected sine signal and the corrected cosine signal can be obtained.

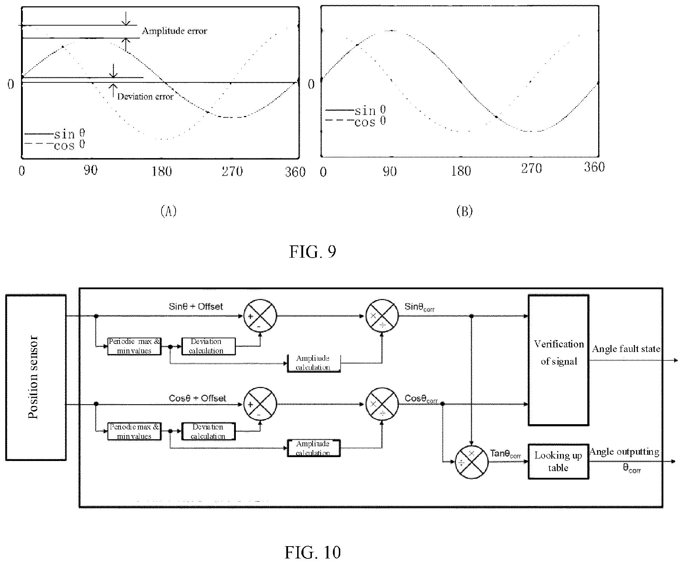

In some embodiments, correcting the electrical signal may include correcting an amplitude of the electrical signal and correcting deviation of the electrical signal. That is, correction parameters required by the electrical signal include an amplitude and deviation of an output value of the position sensor 12. In one embodiment, the electrical signal obtained by the position sensor 12 is illustrated in FIG. 9 (A). The deviation refers to a difference between an average value of the output value of the electrical signal and the 0 position of a vertical axis. The amplitude is half of the difference between the maximum value and the minimum value of the output value of the electrical signal. The corrected electrical signal of the position sensor 12 is illustrated in FIG. 9 (B).

As illustrated in FIG. 10, it should be understood that the sine signal and the cosine signal outputted by the position sensor 12 are acquired, and the maximum value and the minimum value of the sine signal within one period are calculated. Then, deviation calculation and amplitude calculation are performed, and the maximum value and the minimum value of the cosine signal within one period are simultaneously calculated, and again the deviation calculation and the amplitude calculation are performed, so as to correct the sine signal and the cosine signal. Based on the corrected sine signal and the corrected cosine signal, the tangent value of the first angle $\theta1$ of the motor 11 at some moment is calculated by using the first algorithm, and the first angle $\theta1$ corresponding to the tangent value is obtained through looking up the table based on the tangent value. Also, the tangent value of the second angle $\theta2$ of the motor 11 at the same moment is calculated by using the second algorithm, and the second angle $\theta2$ corresponding to the tangent value is obtained through looking up the table based on the tangent value.

The signal is verified based on the difference between the first angle $\theta1$ and the second angle $\theta2$. In response to the difference between the first angle $\theta1$ and the second angle $\theta2$ being smaller than or equal to the predetermined value, that there is no fault in the position signal of the motor 11 can be determined. In response to the difference between the first angle $\theta1$ and the second angle $\theta2$ being greater than the predetermined value within the predetermined time period, that whether there is a fault in the position signal of the motor 11 is determined. The control system 10 may then output an angular fault state for the user to perform inspection and maintenance.

In this way, by correcting the electrical signal outputted by the position sensor 12, it is convenient to calculate the angle of the motor 11 at the same moment by the two algorithms subsequently. That whether there is a fault in the position signal of the motor 11 is determined by a difference between two angle values.

In summary, by acquiring the electrical signal outputted by the position sensor 12, based on the electrical signal, the first angle $\theta1$ of the motor 11 is calculated by using the first algorithm, and the second angle $\theta2$ of the motor 11 is calculated by using the second algorithm. The first angle $\theta1$ and the second angle $\theta2$ are calculated. In response to the difference between the first angle $\theta1$ and the second angle $\theta2$ being smaller than or equal to the predetermined value, that there is no fault in the position signal of the motor 11 can be determined. Torque request input to the controller 14 is converted into the control instruction for controlling the operation of the motor 11 based on the current position information of the motor 11. In response to the difference between the first angle $\theta1$ and the second angle $\theta2$ being greater than the predetermined value within the predetermined time period, that there is a fault in the position signal of the motor 11 can be determined. When there is a fault in the position signal of the motor 11, the control system 10 may output the fault state of the position signal of the motor 11, so as to facilitate the maintenance by the user.

Without hardware redundancy, self-diagnosis can be performed by the inherent mathematical characteristics of the signal of the position sensor 12, realizing the self-verification of whether the electrical signal is valid. Verification of whether there is the fault in the position signal of the motor 11 reduces the development cost of functional safety monitoring of the position sensor 12, and improves robustness of the control system 10. Safety verification of the position sensor 12 can be realized at a lower cost, which can avoid generation of the unexpected torque by the vehicle during outputting power, ensuring the normal driving of the vehicle.

In the present disclosure, the description with reference to the terms "one embodiment," "some embodiments," "an illustrative embodiment," "an example," "a specific example," or "some examples," etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Moreover, the specific features, structures, materials, or characteristics as described can be combined in any one or more embodiments or examples as appropriate.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

**Claims**

1.　A method for determining a fault in a position signal of a motor, comprising:

acquiring an electrical signal outputted by a position sensor, the position sensor being configured to acquire an angle of the motor;
calculating a first angle of the motor based on the electrical signal by using a first algorithm;
calculating a second angle of the motor based on the electrical signal by using a second algorithm; and
in response to a difference between the first angle and the second angle being smaller than or equal to a predetermined value, determining that there is no fault in the position signal of the motor.

2.　The method for determining the fault in the position signal of the motor according to claim 1, wherein said calculating the first angle of the motor based on the electrical signal by using the first algorithm comprises:

calculating a tangent value of the first angle of the motor based on the electrical signal by using the first algorithm; and

obtaining the first angle of the motor based on the tangent value of the first angle of the motor.

3. The method for determining the fault in the position signal of the motor according to claim 1, wherein the first algorithm is:

$$Tan\theta_{n-1} = \frac{\sin \theta_{n-1}}{\cos \theta_{n-1}},$$

where $\theta_{n-1}$ represents an angle of the motor at a moment $n$-1.

4. The method for determining the fault in the position signal of the motor according to claim 1, wherein said calculating the second angle of the motor based on the electrical signal by using the second algorithm comprises:

calculating a tangent value of the second angle of the motor based on the electrical signal by using the second algorithm; and
obtaining the second angle of the motor based on the tangent value of the second angle of the motor.

5. The method for determining the fault in the position signal of the motor according to claim 1, wherein the second algorithm is:

$$Tan\theta_{n-1} = \frac{-\Delta\cos \theta_{n-1}}{\Delta\sin \theta_{n-1}} = \frac{-\left(\cos \theta_n - \cos \theta_{n-2}\right)}{\sin \theta_n - \sin \theta_{n-2}},$$

where $\theta_n$ represents an angle of the motor at a moment $n$, $\theta_{n-1}$ is an angle of the motor at a moment $n$-1, and $\theta_{n-2}$ is an angle of the motor at a moment $n$-2.

6. The method for determining the fault in the position signal of the motor according to claim 1, further comprising:
in response to the difference between the first angle and the second angle being greater than the predetermined value within a predetermined time period, determining that there is a fault in the position signal of the motor.

7. The method for determining the fault in the position signal of the motor according to claim 1, further comprising, prior to said calculating the first angle of the motor based on the electrical signal by using the first algorithm:
correcting the electrical signal.

8. A control device, comprising:

an acquiring module configured to acquire an electrical signal outputted by a position sensor, the position sensor being configured to acquire an angle of a motor;
a first calculation module configured to calculate a first angle of the motor based on the electrical signal by using a first algorithm;
a second calculation module configured to calculate a second angle of the motor based on the electrical signal by using a second algorithm; and
a determination module configured to determine, in response to a difference between the first angle and the second angle being smaller than or equal to a predetermined value, that there is no fault in a position signal of the motor.

9. A control system, comprising:

a motor;
a position sensor connected to the motor;
an inverter connected to the motor; and
a controller connected to both the position sensor and the inverter, the controller being configured to implement the method for determining the fault in the position signal of the motor according to any one of claims 1 to 7.

10. A vehicle, comprising the control system according to claim 9.

Acquiring an electrical signal outputted by a position sensor, the position sensor being configured to acquire an angle of the motor — S10

Calculating a first angle of the motor based on the electrical signal by using a first algorithm — S20

Calculating a second angle of the motor based on the electrical signal by using a second algorithm — S30

In response to a difference between the first angle and the second angle being smaller than or equal to a predetermined value, determining that there is no fault in the position signal of the motor — S40

FIG. 1

10

14

Torque request

$i_d$
$i_q$
$\theta$ corr

13

PWM_U
PWM_V
PWM_W

11

$\theta$

12

FIG. 2

20

Control device

21 — Acquiring module

22 — Correction module

23 — First calculation module

24 — Second calculation module

25 — Determination module

FIG. 3

Within a certain time period $Sin\theta_{corr}$

Within a certain time period $Cos\theta_{corr}$

High-frequency signal processing

$Sin\theta_{corr@n-1}$
$Cos\theta_{corr@n-1}$

First algorithm

$\theta_{corr1@n-1}$

$Sin\theta_{corr@n}$
$Cos\theta_{corr@n}$
$Sin\theta_{corr@n-2}$
$Cos\theta_{corr@n-2}$

Second algorithm

$\theta_{corr2@n-1}$

Verification result arbitration

Angle fault state

FIG. 4

Acquiring the electrical signal outputted by the position sensor, the position sensor being configured to acquire the angle of the motor — S10

Calculating a tangent value of the first angle of the motor based on the electrical signal by using the first algorithm — S21

Obtaining the first angle of the motor based on the tangent value of the first angle of the motor — S22

Calculating the second angle of the motor based on the electrical signal by using the second algorithm — S30

In response to the difference between the first angle and the second angle being smaller than or equal to the predetermined value, determining that there is no fault in the position signal of the motor — S40

FIG. 5

Acquiring the electrical signal outputted by the position sensor, the position sensor being configured to acquire the angle of the motor — S10

Calculating the first angle of the motor based on the electrical signal by using the first algorithm — S20

Calculating a tangent value of the second angle of the motor based on the electrical signal by using the second algorithm — S31

Obtaining the second angle of the motor based on the tangent value of the second angle of the motor — S32

In response to the difference between the first angle and the second angle being smaller than or equal to the predetermined value, determining that there is no fault in the position signal of the motor — S40

FIG. 6

EP 4 510 440 A1

FIG. 7

FIG. 8

13

(A)                                                    (B)

FIG. 9

FIG. 10

## INTERNATIONAL SEARCH REPORT

| International application No. |
|---|
| **PCT/CN2023/109654** |

### A. CLASSIFICATION OF SUBJECT MATTER

H02P6/16(2016.01)i; H02P23/14(2006.01)i

According to International Patent Classification (IPC) or to both national classification and IPC

### B. FIELDS SEARCHED

Minimum documentation searched (classification system followed by classification symbols)

IPC:H02P

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, WPABS: 电机, 位置, 故障, 冗余, 正弦, 正切, 差, 阈值, motor, position, fault, redundant, sine, tangent, difference, threshold

### C. DOCUMENTS CONSIDERED TO BE RELEVANT

| Category* | Citation of document, with indication, where appropriate, of the relevant passages | Relevant to claim No. |
|---|---|---|
| PX | CN 115411978 A (ZHEJIANG GEELY AUTOMOBILE HOLDINGS LTD. et al.) 29 November 2022 (2022-11-29)<br>description, paragraphs 53-107, and figures 1-10 | 1-10 |
| Y | CN 108599664 A (SUNGROW POWER SUPPLY CO., LTD.) 28 September 2018 (2018-09-28)<br>description, paragraphs 48-103, and figures 1-5 | 1-4, 6-10 |
| Y | CN 101319915 A (LIANYUNGANG JIERUI ELECTRONICS CO., LTD.) 10 December 2008 (2008-12-10)<br>description, p. 3, lines 1-19 | 1-4, 6-10 |
| A | JP 2005114442 A (HITACHI LTD.) 28 April 2005 (2005-04-28)<br>entire document | 1-10 |
| A | CN 106092150 A (TONGJI UNIVERSITY) 09 November 2016 (2016-11-09)<br>entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 October 2023** | **19 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109654**

| Patent document cited in search report | | | Publication date (day/month/year) | Patent family member(s) | | | Publication date (day/month/year) |
|---|---|---|---|---|---|---|---|
| CN | 115411978 | A | 29 November 2022 | None | | | |
| CN | 108599664 | A | 28 September 2018 | None | | | |
| CN | 101319915 | A | 10 December 2008 | CN | 100575884 | C | 30 December 2009 |
| JP | 2005114442 | A | 28 April 2005 | None | | | |
| CN | 106092150 | A | 09 November 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210966685